# EUROPEAN PATENT APPLICATION

(11) **EP 4 645 772 A1**
(43) Date of publication of application: **05.11.2025**
(21) Application number: 22969575.4
(22) Date of filing: 28.12.2022
(51) Int. Cl.: H04L 27/00

(54) **MONITORING METHOD AND APPARATUS, CONTROL METHOD AND APPARATUS, DEVICE, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Dehns Germany Partnerschaft mbB
(86) International application number: PCT/CN2022/142817
(87) International publication number: WO 2024/138423

(57) **Abstract**

The present disclosure provides a monitoring method and apparatus, a control method and apparatus, a device, and a readable storage medium, applied to the technical field of wireless communications. The monitoring method comprises: monitoring a low-power wake-up signal (LP WUS) before a first time domain position within a first time period, wherein the first time period is a physical downlink control channel (PDCCH) monitoring skipping duration, the first time domain position is a starting time domain position of a first common search space (CSS), and the LP WUS is used for waking up a user equipment to monitor the first CSS.

## Description

### TECHNICAL FIELD

The present disclosure relates to the field of wireless communication technology, and in particular to a monitoring method, a control method, an apparatus, a device, and a readable storage medium.

### BACKGROUND

In order to save power consumption of user equipment (UE), the network device can indicate a power saving signal through downlink control information (DCI). The power saving signal is configured to instruct the UE to skip monitoring (or referred to as blind detection) of the physical downlink control channel (PDCCH) for a period of time. It can be abbreviated as the power saving signal configured to indicate PDCCH monitoring skipping (or PDCCH skipping). That is, when there is no data transmission, or when the network device expects a certain time interval between two consecutive scheduling PDCCHs, the power saving signal based on DCI can instruct the UE to skip PDCCH monitoring for a period of time, which can save the power consumption of the UE.

PDCCH monitoring skipping can be applicable to UE specific search space (USS) and part of common search space (CSS), but may not be applicable to another part of CSS, so it is necessary to consider how to save UE energy consumption when applying PDCCH monitoring skipping.

### SUMMARY

The present disclosure provides a monitoring method, a control method, an apparatus, a device, and a readable storage medium.

According to a first aspect, there is provided a monitoring method, performed by a user equipment UE, the method including:
monitoring a low power wake-up signal LP WUS before a first time domain position in a first time period, where the first time period is a time period PDCCH skipping duration for skipping monitoring of a physical downlink control channel, the first time domain position is a starting time domain position of a first common search space CSS, and the LP WUS is configured to wake up the user equipment to monitor the first CSS.

In some possible implementations, monitoring the LP WUS before the first time domain position in the first time period includes:
monitoring the LP WUS in a second time period in the first time period, where the second time period precedes the first time domain position.

In some possible implementations, an ending time domain position of the second time period is the first time domain position, or the ending time domain position of the second time period precedes the first time domain position.

In some possible implementations, the second time period does not overlap with the user equipment active time period, and the user equipment active time period is a time period in which the user equipment needs to monitor the PDCCH.

In some possible implementations, the method further includes:
after receiving the LP WUS, monitoring the first CSS.

In some possible implementations, the method further includes:
in a case where the second time period for the user equipment to monitor the LP WUS overlaps with the user equipment active time period, not monitoring the LP WUS in the second time period, where the user equipment active time period is a time period in which the user equipment needs to monitor the PDCCH, and the second time period precedes the first time domain position.

In some possible implementations, the method further includes:
not monitoring a second CSS corresponding to the second time period, where the second CSS is one of the first CSS.

In some possible implementations, the user equipment active time period is an active time period in which the user equipment is configured with connected mode discontinuous reception C-DRX.

In some possible implementations, the LP WUS is a multicast LP WUS or a broadcast LP WUS, and the LP WUS corresponds to multiple user equipments;
wherein the LP WUS being configured to wake up the user equipment to monitor the first CSS is to wake up part or all of the UEs.

In some possible implementations, the LP WUS is a unicast LP WUS corresponding to the user equipment.

In some possible implementations, the first CSS is in an active bandwidth part BWP of the user equipment.

In some possible implementations, the first CSS is at least one of:
Type 0 CSS, Type 0A CSS, Type 0B CSS, Type 1 CSS, Type 1A CSS, Type 2 CSS, Type 2A CSS.

According to a second aspect, there is provided a control method, performed by a network device, the method including:
sending a low power wake-up signal LP WUS to a user equipment UE before a first time domain position in a first time period, where the first time period is a time period PDCCH skipping duration for skipping monitoring of a physical downlink control channel PDCCH, the first time domain position is a starting time domain position of a first common search space CSS, and the LP WUS is configured to wake up the user equipment to monitor the first CSS.

In some possible implementations, sending the LP WUS before the first time domain position in the first time period includes:
sending the LP WUS in a second time period in the first time period, where the second time period precedes the first time domain position.

In some possible implementations, an ending time domain position of the second time period is the first time domain position, or the ending time domain position of the second time period precedes the first time domain position.

In some possible implementations, the second time period does not overlap with the user equipment active time period, and the user equipment active time period is a time period in which the user equipment needs to monitor the PDCCH.

In some possible implementations, the method further includes:
sending the first CSS.

In some possible implementations, the method further includes:
in a case where the second time period for the user equipment to monitor the LP WUS overlaps with the user equipment active time period, not sending the LP WUS in the second time period, where the user equipment active time period is a time period in which the user equipment needs to monitor the PDCCH, and the second time period precedes the first time domain position.

In some possible implementations, the method further includes:
not sending a second CSS corresponding to the second time period, where the second CSS is one of the first CSS.

In some possible implementations, the user equipment active time period is an active time period in which the user equipment is configured with connected mode discontinuous reception C-DRX.

In some possible implementations, the LP WUS is a multicast LP WUS or a broadcast LP WUS, and the LP WUS corresponds to multiple user equipments;
where the LP WUS being configured to wake up the user equipment to monitor the first CSS is to wake up part or all of the UEs.

In some possible implementations, the LP WUS is a unicast LP WUS, and the LP WUS corresponds to the user equipment.

In some possible implementations, the first CSS is in an active bandwidth part BWP of the user equipment.

In some possible implementations, the first CSS is at least one of:
Type 0 CSS, Type 0A CSS, Type 0B CSS, Type 1 CSS, Type 1A CSS, Type 2 CSS, Type 2A CSS.

According to a third aspect, there is provided a monitoring device, configured in a user equipment, including:
a transceiver module, configured to monitor a low power wake-up signal LP WUS before a first time domain position in a first time period, where the first time period is a time period PDCCH skipping duration for skipping monitoring of a physical downlink control channel, the first time domain position is a starting time domain position of a first common search space CSS, and the LP WUS is configured to wake up the user equipment to monitor the first CSS.

According to a fourth aspect, there is provided a control device, configured in a network device, including:
a transceiver module, configured to send a low power wake-up signal LP WUS to a user equipment UE before a first time domain position in a first time period, where the first time period is a time period PDCCH skipping duration for skipping monitoring of a physical downlink control channel, the first time domain position is a starting time domain position of a first common search space CSS, and the LP WUS is configured to wake up the user equipment to monitor the first CSS.

According to a fifth aspect, there is provided an electronic device, including a processor and a memory, where:
the memory is configured to store a computer program; and
the processor is configured to execute the computer program to implement the method according to the first aspect or any possible design of the first aspect.

According to a sixth aspect, there is provided an electronic device, including a processor and a memory, where:
the memory is configured to store a computer program; and
the processor is configured to execute the computer program to implement the method according to the second aspect or any possible design of the second aspect.

According to a seventh aspect, there is provided a computer-readable storage medium, where instructions are stored in the computer-readable storage medium, and when the instructions are called and executed on a computer, the computer executes the method according to the first aspect or any possible design of the first aspect.

According to an eighth aspect, there is provided a computer-readable storage medium, where instructions are stored in the computer-readable storage medium, and when the instructions are called and executed on a computer, the computer executes the method according to the second aspect or any possible design of the second aspect.

In the present disclosure, using the LP WUS, by monitoring the LP WUS, it is determined whether to monitor the first CSS. After receiving the LP WUS, the UE monitors the first CSS, and does not monitor the first CSS if not receiving LP WUS. When using PDCCH monitoring skipping, the monitoring effect is guaranteed while also saving the energy consumption of the UE.

### BRIEF DESCRIPTION OF THE DRAWINGS

The drawings described herein are used to provide further understanding of the embodiments of the present disclosure and constitute a part of the present application. The schematic embodiments of the embodiments of the present disclosure and their descriptions are used to explain the embodiments of the present disclosure and do not constitute improper limitations on the embodiments of the present disclosure. In the drawings:

The drawings herein are incorporated into the specification and constitute a part of the specification, showing embodiments that conform to the embodiments of the present disclosure, and together with the specification, are used to explain the principles of the embodiments of the present disclosure.
FIG. 1 is a schematic diagram of a wireless communication system architecture provided by an embodiment of the present disclosure;
FIG. 2 is an interactive schematic diagram of a monitoring method provided by an embodiment of the present disclosure;
FIG. 3 is a schematic diagram of a time domain segment position provided by an embodiment of the present disclosure;
FIG. 4 is a schematic diagram of another time domain segment position provided by an embodiment of the present disclosure;
FIG. 5 is a schematic diagram of another time domain segment position provided by an embodiment of the present disclosure;
FIG. 6 is a schematic diagram of another time domain segment position provided by an embodiment of the present disclosure;
FIG. 7 is a flowchart of a monitoring method performed by a UE provided by an embodiment of the present disclosure;
FIG. 8 is a flowchart of another monitoring method performed by a UE provided by an embodiment of the present disclosure;
FIG. 9 is a flowchart of another monitoring method performed by a UE provided by an embodiment of the present disclosure;
FIG. 10 is a flow chart of a control method performed by a network device according to an embodiment of the present disclosure;
FIG. 11 is a flow chart of another control method performed by a network device according to an embodiment of the present disclosure;
FIG. 12 is a flow chart of another control method performed by a network device according to an embodiment of the present disclosure;
FIG. 13 is a structural diagram of a monitoring device according to an embodiment of the present disclosure;
FIG. 14 is a structural diagram of another monitoring device according to an embodiment of the present disclosure;
FIG. 15 is a structural diagram of a control device according to an embodiment of the present disclosure;
FIG. 16 is a structural diagram of another control device according to an embodiment of the present disclosure.

### DETAILED DESCRIPTION

The embodiments of the present disclosure are now further described in conjunction with the drawings and specific embodiments.

The example embodiments will be described in detail here, and examples thereof are shown in the drawings. When the following description refers to the drawings, unless otherwise indicated, the same numbers in different drawings represent the same or similar elements. The embodiments described in the following example embodiments do not represent all embodiments consistent with the embodiments of the present disclosure. Instead, they are only examples of devices and methods consistent with some aspects of the present disclosure as detailed in the attached claims.

The terms used in the embodiments of the present disclosure are only for the purpose of describing specific embodiments and are not intended to limit the embodiments of the present disclosure. The singular forms "a", "an" and "the" used in the embodiments of the present disclosure and the attached claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used in the embodiments of the present disclosure to describe various information, such information should not be limited to these terms. These terms are only used to distinguish the same type of information from each other. For example, without departing from the scope of the embodiments of the present disclosure, the first indication information may also be referred to as the second indication information, and similarly, the second indication information may also be referred to as the first indication information. Depending on the context, the words "if" as used herein may be interpreted as "upon..." or "when..." or "in response to determining".

The embodiments of the present disclosure are described in detail below, and examples of the embodiments are shown in the accompanying drawings, wherein the same or similar reference numerals throughout represent the same or similar elements. The embodiments described below with reference to the accompanying drawings are exemplary and are intended to be used to explain the present disclosure, and cannot be understood as limiting the present disclosure.

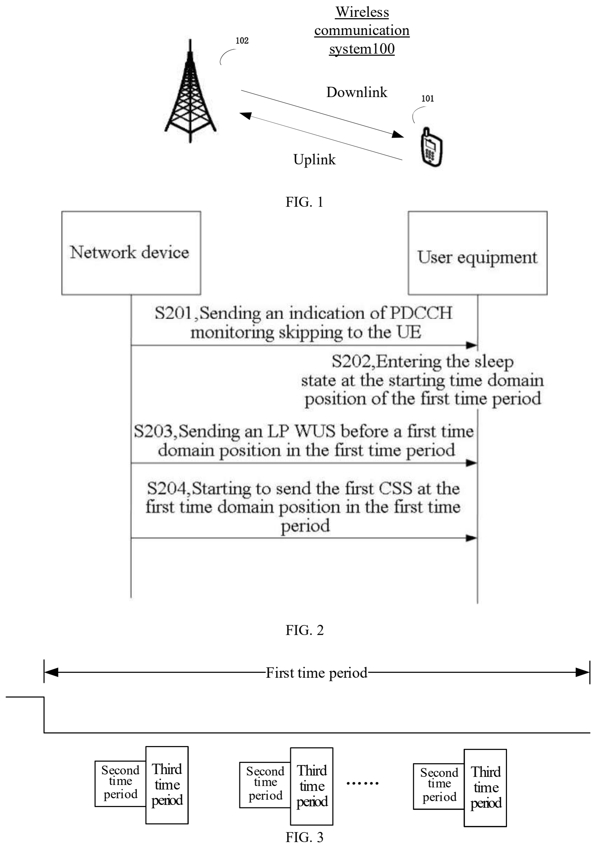

As shown in FIG. 1, the method provided in the embodiments of the present disclosure may be applied to a wireless communication system 100, which may include a user equipment 101 and a network device 102, and the number of devices included is not limited.

It should be understood that the above wireless communication system 100 may be applicable to both low-frequency scenarios and high-frequency scenarios. The application scenarios of the wireless communication system 100 include but are not limited to the long term evolution (LTE) system, the LTE frequency division duplex (FDD) system, the LTE time division duplex (TDD) system, the worldwide interoperability for micro wave access (WiMAX) communication system, the cloud radio access network (CRAN) system, the future fifth generation (5G) system, the new radio (NR) communication system or the future evolved public land mobile network (PLMN) system, etc.

The user equipment 101 shown above can be a terminal, an access user equipment, a user equipment unit, a user equipment station, a mobile station (MS), a remote station, a remote user equipment, a mobile user equipment (mobile terminal), a wireless communication device, a user equipment agent, etc. The user equipment 101 can have a wireless transceiver function, which can communicate (such as wirelessly communicate) with one or more network devices of one or more communication systems and receive network service provided by the network device, where the network device includes but is not limited to the illustrated network device 102.

The user equipment 101 can be a cellular phone, a cordless phone, a session initiation protocol (SIP) phone, a wireless local loop (WLL) station, a personal digital assistant (PDA) device, a handheld device with wireless communication function, a computing device or other processing device connected to a wireless modem, a vehicle-mounted device, a wearable device, a user equipment in a future 5G network, or a user equipment in a future evolved PLMN network, etc.

For example, the network device 102 can be an access network device (or access network point). The access network device refers to a device that provides network access function, such as a radio access network (RAN) base station, etc. Specifically, it can include a base station (BS), or it can include a base station and a wireless resource management device for controlling the base station, etc., and it can also include a relay station (relay device), an access point, and a base station in a future 5G network, a base station in a future evolved PLMN network, or an NR base station, etc., and it can be a wearable device or a vehicle-mounted device. The network device 102 can also be a communication chip with a communication module.

PDCCH monitoring skipping can be applicable to UE specific search space (USS) and a part of common search space (CSS), but may not be applicable to another part of CSS, where CSS can be configured to send broadcast, multicast, and unicast DCI, and USS is configured by the network device for the UE, and USS can be configured to send UE-specific DCI.

In some possible implementations, PDCCH monitoring skipping is only applied to Type #3 CSS and USS. Among them, Type #3 CSS is the CSS configured by the network device for the UE after the UE enters the Radio Resource Control (RRC) connected mode. For the UE, in addition to being configured with Type #3 CSS and USS, other CSSs may also be configured, such as Type 0/0A/0B/1/1A/2/2A CSS. Among them:
Type0-PDCCH CSS set is configured in the primary cell of the primary cell group to send PDCCH for scheduling SIB1;
Type0A-PDCCH CSS set is configured in the primary cell of the primary cell group to send PDCCH for scheduling other system information;
Type0B-PDCCH CSS set is configured in the primary cell of the primary cell group to send PDCCH for scheduling broadcast and multicast information;
Type1-PDCCH CSS set is configured in the primary cell to transfer PDCCH for scheduling random access information;
Type1A-PDCCH CSS set is configured in the primary cell to transfer PDCCH for scheduling small data;
Type2-PDCCH CSS set is configured in the primary cell of the primary cell group to send PDCCH for scheduling paging information;
Type2A-PDCCH CSS set is configured in the primary cell of the primary cell group to send PDCCH for scheduling PEI (paging early indication).

UE in connected mode has the need to monitor CSS other than Type #3 CSS and USS.

For example, if a paging search space is configured in the activated bandwidth part (BWP), the UE in connected mode needs to monitor Type2-PDCCH CSS at least once in each system information update cycle.

For another example, for a UE with Earthquake and Tsunami Warning System (ETWS) function, or a UE with Commercial Mobile Alert System (CMAS) function, it is necessary to monitor the safety warning notification information (PWS notification) in the paging occasion (PO) at least once in each default discontinuous reception (DRX) cycle. However, not every time the UE monitors, it can monitor the corresponding DCI, because the network device may not send the relevant DCI.

If the UE is instructed to skip PDCCH monitoring, this instruction of PDCCH monitoring skipping is only effective for Type #3 CSS and USS, and is not effective for CSS other than Type #3 CSS and USS. The UE still needs to perform DCI blind detection in CSS other than Type #3 CSS and USS, and the network device does not necessarily send the related DCI of CSS other than Type #3 CSS and USS, which leads to energy waste of UE.

Considering that a low power wake up signal (LP WUS) can be used to notify the UE whether it needs to monitor CSS other than Type #3 CSS and USS, the UE can monitor CSS other than Type #3 CSS and USS after receiving LP WUS. When the UE does not receive LP WUS, it will not monitor CSS other than Type #3 CSS and USS, thereby saving UE energy consumption when using PDCCH monitoring skipping.

When using LP- WUS, the UE can include two receivers, one of which is a primary receiver and the other is a low-power receiver. The power consumption of the low power receiver is much less than that of the primary receiver. In order to save the power consumption of the UE, the primary receiver can be put into a sleep state and the low-power receiver can be put into a working state. After the low-power receiver receives a low power wake-up signal (LP- WUS) sent by the network device, the primary receiver can be woken up.

The embodiment of the present disclosure provides a monitoring method, and FIG. 2 is a flowchart of a monitoring method according to an example embodiment. As shown in FIG. 2, the method includes S201 to S204:
S201, the network device sends an indication of PDCCH monitoring skipping to the UE.

The indication of PDCCH monitoring skipping takes effect in the first time period, and the first time period is the time period of PDCCH monitoring skipping.

In an example, a time domain length is set between the starting time domain position of the first time period and the ending time domain position of receiving the indication of PDCCH monitoring skipping, and the set time domain length can be agreed by the protocol or configured in advance by the network device.

S202, the UE enters the sleep state at the starting time domain position of the first time period.

The UE does not monitor any PDCCH in the sleep state.

S203, the network device sends an LP WUS before a first time domain position in the first time period, and the UE monitors the LP WUS before the first time domain position in the first time period, where the LP WUS is configured to wake up the UE to monitor the first CSS.

The first time domain position is the starting time domain position of the first CSS. Since the first CSS is periodic, the first time domain position is the starting time domain position of each first CSS in the periodic first CSS.

In some possible implementations, the LP WUS is a multicast LP WUS or a broadcast LP WUS, the LP WUS corresponds to multiple UEs, and the LP WUS being configured to wake up the UE to monitor the first CSS is to wake up part or all of the UEs. In one example, it is to wake up some UEs in the same service cell, and in another example, it is to wake up all UEs in the same service cell.

In some possible implementations, the network device groups UEs in the same service cell, divides UEs that need to be woken up into one group, divides UEs that do not need to be woken up into another group, sends a multicast LP WUS or a broadcast LP WUS, and indicates in the multicast LP WUS or the broadcast LP WUS which UEs are included in the group that needs to be woken up and which UEs are included in the group that does not need to be woken up (or described as, the multicast LP WUS or the broadcast LP WUS includes indication information, and the indication information indicates UEs that need to be woken up and UEs that do not need to be woken up). After receiving the multicast LP WUS or the broadcast LP WUS, the UE determines whether it needs to be woken up according to the indication in the multicast LP WUS or the broadcast LP WUS.

In some possible implementations, the network device groups UEs in the same service cell. If a certain UE needs to be awakened, the LP WUS indicates that the group to which the UE belongs needs to be awakened. If no UE in a certain group needs to be awakened, the LP WUS indicates that the group does not need to be awakened. After receiving the multicast LP WUS or the broadcast LP WUS, the UE determines whether it needs to be awakened according to the group indication in the multicast LP WUS or the broadcast LP WUS.

In some possible implementations, the LP WUS is a unicast LP WUS, and the LP WUS corresponds to the UE.

In some possible implementations, the first CSS is at least one type of CSS other than Type #3 CSS and USS.

In one example, the first CSS is at least one of the following:
Type #0 CSS, Type #0A CSS, Type #0B CSS, Type #1 CSS, Type #1A CSS, Type #2 CSS, Type #2A CSS.

In one example, the first CSS is in the activated BWP of the UE.

In some possible implementations, the network device sends an LP WUS in a second time period in the first time period, and the second time period precedes the first time domain position.

Since the first CSS is periodic, and the first time domain position is the starting time domain position of each first CSS in the periodic first CSS, the second time period is periodic, and there is a second time period before the time period corresponding to each first CSS in the periodic first CSS.

In one example, as shown in FIG. 3, the ending time domain position of the second time period is the first time domain position. The third time period is the time period in which the network device sends the first CSS, and is also the time period in which the UE monitors the first CSS.

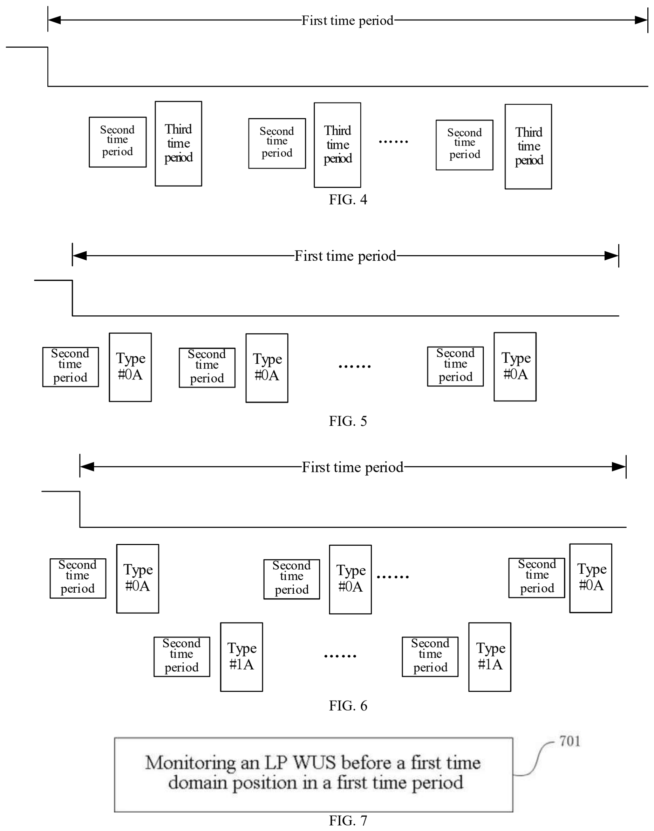

In another example, as shown in FIG. 4, the ending time domain position of the second time period is before the first time domain position. The third time period is the time period in which the network device sends the first CSS, and is also the time period in which the UE monitors the first CSS.

In one example, when the first CSS includes one type of CSS, there is a second time period before the time period corresponding to each first CSS in the periodic first CSS.

In another example, when the first CSS includes multiple types of CSS, each type of CSS corresponds to a piece of time period position information (the time period position information is the position information of the second time period), and different CSSs correspond to different time period position information, which can also be described as that each type of CSS corresponds to a type of second time period, and different CSSs correspond to different second time periods.

In some possible implementations, for the second time period that does not overlap with the UE active time period, the network device sends LP WUS in the second time period when the UE needs to be awakened, and the UE active time period is the time period in which the UE needs to monitor the PDCCH.

S203 further includes: after the UE receives the LP WUS through the low-power receiver, the primary receiver is awakened through the low-power receiver, so that the primary receiver switches from the sleep state to the working state.

S204, the network device starts to send the first CSS at the first time domain position in the first time period, and the UE monitors the first CSS.

After the primary receiver of the UE switches from the sleep state to the working state, it monitors the first CSS.

In some possible implementations, the UE monitors the first CSS as follows: the UE starts to monitor the first CSS at the first time domain position in the first time period.

This method further includes the following situation: when the second time period overlaps with the UE active time period, the network device does not send LP WUS in the second time period, and does not send a second CSS corresponding to the second time period, the second CSS is one of the first CSS, and the UE does not monitor LP WUS in the second time period, and does not monitor the second CSS corresponding to the second time period.

The following is explained by an example.

As shown in FIG. 5, the first time period is a time period for PDCCH monitoring skipping. The first CSS includes Type#0A.

The network device configures the first position information of the second time period corresponding to Type#0A CSS for Type#0A CSS, and the periodic Type#0A CSS corresponds to the periodic second time period.

The second time period corresponding to a certain Type#0A CSS in the periodic Type#0A CSS overlaps with the UE active time period, and the second time period corresponding to other Type#0A CSSs does not overlap with the UE active time period.

Then, the network device does not send the first wake-up signal in the second time period overlapping with the UE active time period, and the first wake-up signal is configured to wake up the UE to monitor Type#0A CSS.

When the network device needs to wake up the UE, it sends a first wake-up signal in the second time period that does not overlap with the UE active time period. When the network device does not need to wake up the UE, it does not send the first wake-up signal in the second time period that does not overlap with the UE active time period.

As shown in FIG. 6, the first time period is the time period for PDCCH monitoring skipping. The first CSS includes Type#0A and Type#1A.

The network device configures the first position information of the second time period corresponding to the Type#0A CSS for the Type#0A CSS, and configures the second position information of the second time period corresponding to the Type#1A CSS for the Type#1A CSS.

The second time period corresponding to a certain Type#0A CSS in the periodic Type#0A CSS overlaps with the UE active time period, and the second time periods corresponding to other Type#0A CSSs do not overlap with the UE active time period.

The second time period corresponding to each Type#1A CSS of the periodic Type#1A CSS in the first time period does not overlap with the UE active time period.

Then, the network device does not send the first wake-up signal in the second time period corresponding to the Type#0A CSS that overlaps with the UE active time period, and the first wake-up signal is configured to wake up the UE to monitor the Type#0A CSS. The network device sends the first wake-up signal in the second time period corresponding to the Type#0A CSS that does not overlap with the UE active time period.

When the network device needs to wake up the UE, it sends the second wake-up signal in the second time period corresponding to the Type#01A CSS in the first time period. When the network device does not need to wake up the UE, it does not send the second wake-up signal in the second time period corresponding to the Type#01A CSS in the first time period, and the second wake-up signal is configured to wake up the UE to monitor the Type#1A CSS.

The embodiment of the present disclosure provides a monitoring method, which is performed by the UE. FIG. 7 is a flowchart of a monitoring method performed by the UE according to an example embodiment. As shown in FIG. 7, the method includes S701:
S701, monitoring an LP WUS before a first time domain position in a first time period.

The first time period is a time period for PDCCH monitoring skipping, the first time domain position is a starting time domain position of a first CSS, and the LP WUS is configured to wake up the UE to monitor the first CSS.

Since the first CSS is periodic, the first time domain position is the starting time domain position of each first CSS in the periodic first CSS.

In some possible implementations, the LP WUS is a multicast LP WUS or a broadcast LP WUS, the LP WUS corresponds to multiple UEs, and the LP WUS being configured to wake up the UE to monitor the first CSS is to wake up part or all of the UEs. In one example, it is to wake up some UEs in the same service cell, and in another example, it is to wake up all UEs in the same service cell.

In some possible implementations, the LP WUS is a unicast LP WUS, and the LP WUS corresponds to the UE.

In some possible implementations, the first CSS is at least one type of CSS other than Type #3 CSS and USS.

In one example, the first CSS is at least one of the following:
Type #0 CSS, Type #0A CSS, Type #0B CSS, Type #1 CSS, Type #1A CSS, Type #2 CSS, Type #2A CSS.

In one example, the first CSS is in the activated BWP of the UE.

In the embodiment of the present disclosure, whether to monitor the first CSS is determined by monitoring the LP WUS. The UE monitors the first CSS after receiving the LP WUS, and does not monitor the first CSS if not receiving the LP WUS. When using PDCCH monitoring skipping, the monitoring effect is guaranteed while saving the energy consumption of the UE.

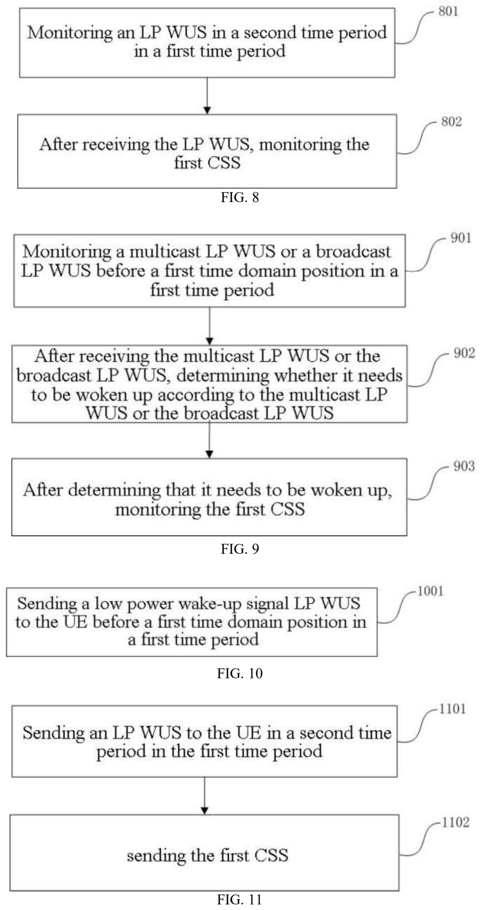

The embodiment of the present disclosure provides a monitoring method, which is performed by the UE. FIG. 8 is a flowchart of a monitoring method performed by the UE according to an example embodiment. As shown in FIG. 8, the method includes S801~S802:

S801, monitoring an LP WUS in a second time period in a first time period.

The first time period is a time period for PDCCH monitoring skipping, the second time period precedes the first time domain position, the first time domain position is the starting time domain position of the first CSS, and the LP WUS is configured to wake up the UE to monitor the first CSS.

Since the first CSS is periodic, and the first time domain position is the starting time domain position of each first CSS in the periodic first CSS, the second time period is periodic, and there is a second time period before the time period corresponding to each first CSS in the periodic first CSS.

In one example, as shown in FIG. 3, the ending time domain position of the second time period is the first time domain position. The third time period is the time period in which the network device sends the first CSS, and is also the time period in which the UE monitors the first CSS.

In another example, as shown in FIG. 4, the ending time domain position of the second time period is before the first time domain position. The third time period is the time period in which the network device sends the first CSS, and is also the time period in which the UE monitors the first CSS.

In one example, when the first CSS includes one type of CSS, there is a second time period before the time period corresponding to each first CSS in the periodic first CSS.

In another example, when the first CSS includes multiple types of CSS, each type of CSS corresponds to a piece of time period position information (the time period position information is the position information of the second time period), and different CSSs correspond to different time period position information, which can also be described as that each type of CSS corresponds to a type of second time period, and different CSSs correspond to different second time periods.

In some possible implementations, for the second time period that does not overlap with the UE active time period, the UE monitors the LP WUS in the second time period, where the UE active time period is the time period in which the UE needs to monitor the PDCCH.

S802, after receiving the LP WUS, monitoring the first CSS.

After receiving the LP WUS through the low-power receiver, the UE wakes up the primary receiver through the low-power receiver, switches the primary receiver from the sleep state to the working state, and monitors the first CSS in the working state.

In some possible implementations, the UE monitors the first CSS as follows: the UE starts to monitor the first CSS at the first time domain position in the first time period.

The method further includes: when a second time period overlaps with the UE active time period, the UE does not monitor the LP WUS in the second time period, and does not monitor a second CSS corresponding to the second time period.

In the embodiment of the present disclosure, whether to monitor the first CSS is determined by monitoring the LP WUS in the second time period in the first time period. The UE monitors the first CSS after receiving the LP WUS, and does not monitor the first CSS if not receiving the LP WUS. When using PDCCH monitoring skipping, the monitoring effect is guaranteed while saving the energy consumption of the UE. Moreover, when the second time period overlaps with the UE active time period, the LP WUS is not monitored in the second time period, which can give priority to the processing in the UE active time period and prevent the UE from having an unexpected behavior of monitoring the PDCCH during the period of PDCCH monitoring skipping.

The embodiment of the present disclosure provides a monitoring method, which is performed by the UE. The method includes: when the second time period overlaps with the UE active time period, not monitoring the LP WUS in the second time period, and not monitoring the second CSS corresponding to the second time period. The second time period has an overlapping area with the first time period, the first time period is the time period of PDCCH monitoring skipping, the second time period precedes the first time domain position, the first time domain position is the starting time domain position of the first CSS, and the LP WUS is configured to wake up the UE to monitor the first CSS.

In the embodiment of the present disclosure, when there is an overlapping area between the second time period and the UE active time period, the LP WUS is not monitored in the second time period, which can give priority to the processing in the UE active time period and prevent the UE from having an unexpected behavior of monitoring the PDCCH during the period of PDCCH monitoring skipping.

The embodiment of the present disclosure provides a monitoring method, which is performed by the UE. FIG. 9 is a flowchart of a monitoring method performed by the UE according to an example embodiment. As shown in FIG. 9, the method includes S901~5902:
S901, monitoring a multicast LP WUS or a broadcast LP WUS before a first time domain position in a first time period.

The first time period is the time period of PDCCH monitoring skipping, the second time period precedes the first time domain position, the first time domain position is the starting time domain position of the first CSS, and the LP WUS is configured to wake up the UE to monitor the first CSS.

Since the first CSS is periodic, and the first time domain position is the starting time domain position of each first CSS in the periodic first CSS, the second time period is periodic, and there is a second time period before the time period corresponding to each first CSS in the periodic first CSS.

In one example, when the first CSS includes one type of CSS, there is a second time period before the time period corresponding to each first CSS in the periodic first CSS.

In another example, when the first CSS includes multiple types of CSS, each type of CSS corresponds to a piece of time period position information (the time period position information is the position information of the second time period), and different CSSs correspond to different time period position information, which can also be described as that each type of CSS corresponds to a type of second time period, and different CSSs correspond to different second time periods.

In some possible implementations, a multicast LP WUS or a broadcast LP WUS is monitored in a second time period in the first time period. For the second time period that does not overlap with the UE active time period, the UE monitors the multicast LP WUS or the broadcast LP WUS in the second time period, where the UE active time period is the time period in which the UE needs to monitor the PDCCH.

S902, after receiving the multicast LP WUS or the broadcast LP WUS, determining whether it needs to be woken up according to the multicast LP WUS or the broadcast LP WUS.

The multicast LP WUS or broadcast LP WUS received by the UE indicates which UEs are included in the group that needs to be awakened and which UEs are included in the group that does not need to be awakened. After receiving the multicast LP WUS or broadcast LP WUS, the UE determines whether it needs to be awakened according to the indication in the multicast LP WUS or broadcast LP WUS.

Or, the multicast LP WUS or broadcast LP WUS received by the UE indicates which groups need to be awakened and which groups do not need to be awakened. After receiving the multicast LP WUS or broadcast LP WUS, the UE determines whether it needs to be awakened according to the group indication in the multicast LP WUS or broadcast LP WUS.

S903, after determining that it needs to be woken up, monitoring the first CSS.

After receiving the LP WUS through the low-power receiver, the UE wakes up the primary receiver through the low-power receiver, switches the primary receiver from the sleep state to the working state, and monitors the first CSS in the working state.

In some possible implementations, the UE monitors the first CSS as follows: the UE starts to monitor the first CSS at the first time domain position in the first time period.

The method further includes: when a second time period overlaps with the UE active time period, the UE does not monitor the multicast LP WUS or the broadcast LP WUS in the second time period, and does not monitor a second CSS corresponding to the second time period.

The embodiment of the present disclosure provides a control method, which is performed by a network device. FIG. 10 is a flowchart of a control method performed by a network device according to an example embodiment. As shown in FIG. 10, the method includes S1001:
S1001, sending a low power wake-up signal LP WUS to the UE before a first time domain position in a first time period.

The first time period is a time period for PDCCH monitoring skipping, the first time domain position is a starting time domain position of a first CSS, and the LP WUS is configured to wake up the UE to monitor the first CSS.

In some possible implementations, the LP WUS is a multicast LP WUS or a broadcast LP WUS, the LP WUS corresponds to multiple UEs, and the LP WUS being configured to wake up the UE to monitor the first CSS is to wake up part or all of the UEs. In one example, it is to wake up some UEs in the same service cell, and in another example, it is to wake up all UEs in the same service cell.

In some possible implementations, the LP WUS is a unicast LP WUS, and the LP WUS corresponds to the UE.

In some possible implementations, the first CSS is at least one type of CSS other than Type #3 CSS and USS.

In one example, the first CSS is at least one of the following:
Type #0 CSS, Type #0A CSS, Type #0B CSS, Type #1 CSS, Type #1A CSS, Type #2 CSS, Type #2A CSS.

In one example, the first CSS is in the activated BWP of the UE.

In the embodiment of the present disclosure, whether the UE monitors the first CSS is controlled by sending the LP WUS. The UE monitors the first CSS after receiving the LP WUS, and does not monitor the first CSS if not receiving the LP WUS. When using PDCCH monitoring skipping, the monitoring effect is guaranteed while saving the energy consumption of the UE.

The embodiment of the present disclosure provides a control method, which is performed by a network device. FIG. 11 is a flowchart of a control method performed by a network device according to an example embodiment. As shown in FIG. 11, the method includes S1101:
S1101, sending an LP WUS to the UE in a second time period in the first time period.

The second time period precedes the first time domain position, the first time period is a time period for PDCCH monitoring skipping, the second time period precedes the first time domain position, the first time domain position is the starting time domain position of the first CSS, and the LP WUS is configured to wake up the UE to monitor the first CSS.

Since the first CSS is periodic, and the first time domain position is the starting time domain position of each first CSS in the periodic first CSS, the second time period is periodic, and there is a second time period before the time period corresponding to each first CSS in the periodic first CSS.

In one example, as shown in FIG. 3, the ending time domain position of the second time period is the first time domain position. The third time period is the time period in which the network device sends the first CSS, and is also the time period in which the UE monitors the first CSS.

In another example, as shown in FIG. 4, the ending time domain position of the second time period is before the first time domain position. The third time period is the time period in which the network device sends the first CSS, and is also the time period in which the UE monitors the first CSS.

In one example, when the first CSS includes one type of CSS, there is a second time period before the time period corresponding to each first CSS in the periodic first CSS.

In another example, when the first CSS includes multiple types of CSS, each type of CSS corresponds to a piece of time period position information (the time period position information is the position information of the second time period), and different CSSs correspond to different time period position information, which can also be described as that each type of CSS corresponds to a type of second time period, and different CSSs correspond to different second time periods.

In some possible implementations, for the second time period that does not overlap with the UE active time period, the network device sends an LP WUS in the second time period when the UE needs to be woken up, where the UE active time period is the time period in which the UE needs to monitor the PDCCH.

S1102, sending the first CSS.

In an example, the first CSS is sent in the third time period. The third time period is the time period in which the network device sends the first CSS, and is also the time period in which the UE monitors the first CSS.

The method further includes: when a second time period overlaps with the UE active time period, the network device does not send an LP WUS in the second time period, and does not send a second CSS corresponding to the second time period, and the second CSS is one of the first CSS.

In the embodiment of the present disclosure, whether the UE monitors the first CSS is controlled by sending the LP WUS in the second time period. The UE monitors the first CSS after receiving the LP WUS, and does not monitor the first CSS if not receiving the LP WUS. When using PDCCH monitoring skipping, the monitoring effect is ensured while saving the energy consumption of the UE. Moreover, when there is an overlapping area between the second time period and the UE active time period, the LP WUS is not sent in the second time period, which can give priority to the processing in the UE active time period, and prevent the UE from having an unexpected behavior of monitoring PDCCH during the period of PDCCH monitoring skipping.

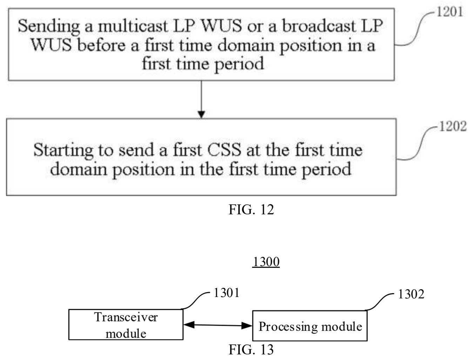

The embodiment of the present disclosure provides a monitoring method, which is performed by a network device. FIG. 12 is a flowchart of a control method performed by a network device according to an example embodiment. As shown in FIG. 12, the method includes S1201 to S1202:
S1201, sending a multicast LP WUS or a broadcast LP WUS before a first time domain position in a first time period.

The first time period is a time period for PDCCH monitoring skipping, the second time period precedes the first time domain position, the first time domain position is a starting time domain position of a first CSS, and the LP WUS is configured to wake up the UE to monitor the first CSS.

Since the first CSS is periodic, and the first time domain position is the starting time domain position of each first CSS in the periodic first CSS, the second time period is periodic, and there is a second time period before the time period corresponding to each first CSS in the periodic first CSS.

In one example, when the first CSS includes one type of CSS, there is a second time period before the time period corresponding to each first CSS in the periodic first CSS.

In another example, when the first CSS includes multiple types of CSS, each type of CSS corresponds to a piece of time period position information (the time period position information is the position information of the second time period), and different CSSs correspond to different time period position information, which can also be described as that each type of CSS corresponds to a type of second time period, and different CSSs correspond to different second time periods.

In some possible implementations, a multicast LP WUS or a broadcast LP WUS is sent in a second time period in a first time period.

The multicast LP WUS or the broadcast LP WUS indicates which UEs are included in the group that needs to be awakened and which UEs are included in the group that does not need to be awakened. After receiving the multicast LP WUS or the broadcast LP WUS, the UE can determine whether it needs to be awakened according to the indication in the multicast LP WUS or the broadcast LP WUS.

S1002, starting to send a first CSS at the first time domain position in the first time period.

The method further includes: when a second time period overlaps with the UE active time period, the network device does not send a multicast LP WUS or a broadcast LP WUS in the second time period, and does not send a second CSS corresponding to the second time period.

Based on the same concept as the above method embodiment, the embodiment of the present disclosure also provides a communication device, which can have the function of the UE in the above method embodiment, and is configured to perform the steps performed by the UE provided in the above embodiment. The function can be implemented by hardware, or can be implemented by software or hardware executing the corresponding software. The hardware or software includes one or more modules corresponding to the above function.

In a possible implementation, the communication device 1300 shown in FIG. 13 can be used as the UE involved in the above method embodiment, and perform the steps performed by the UE in the above method embodiment.

The communication device 1300 includes a transceiver module 1301 and a processing module 1302.

The transceiver module 1301 is configured to monitor a low power wake-up signal LP WUS before a first time domain position in a first time period. The first time period is a PDCCH skipping duration for skipping monitoring of the physical downlink control channel, the first time domain position is a starting time domain position of the first common search space CSS, and the LP WUS is configured to wake up the user equipment to monitor the first CSS.

In some possible implementations, the transceiver module 1301 is further configured to monitor the LP WUS in a second time period in the first time period, and the second time period precedes the first time domain position.

In some possible implementations, the ending time domain position of the second time period is the first time domain position, or the ending time domain position of the second time period precedes the first time domain position.

In some possible implementations, the second time period does not overlap with the user equipment active time period, and the user equipment active time period is a time period in which the user equipment needs to monitor the PDCCH.

In some possible implementations, the transceiver module 1301 is further configured to monitor the first CSS after receiving the LP WUS.

In some possible implementations, the transceiver module 1301 is further configured to not monitor the LP WUS in the second time period when the second time period for the user equipment to monitor the LP WUS overlaps with the user equipment active time period. The user equipment active time period is a time period in which the user equipment needs to monitor the PDCCH, and the second time period precedes the first time domain position.

In some possible implementations, the transceiver module 1301 is further configured not to monitor a second CSS corresponding to the second time period, and the second CSS is one of the first CSS.

In some possible implementations, the user equipment active time period is an active time period in which the user equipment is configured with connected mode discontinuous reception C-DRX.

In some possible implementations, the LP WUS is a multicast LP WUS or a broadcast LP WUS, and the LP WUS corresponds to multiple user equipments.

The LP WUS being configured to wake up the user equipment to monitor the first CSS is to wake up part or all of the UEs.

In some possible implementations, the LP WUS is a unicast LP WUS, and the LP WUS corresponds to the user equipment.

In some possible implementations, the first CSS is in the active bandwidth part BWP of the user equipment.

In some possible implementations, the first CSS is at least one of the following:
Type 0 CSS, Type 0A CSS, Type 0B CSS, Type 1 CSS, Type 1A CSS, Type 2 CSS, Type 2A CSS.

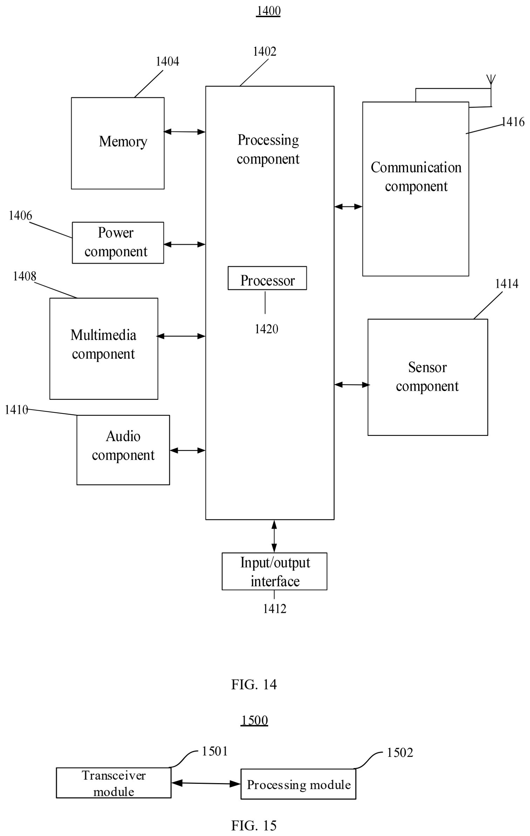

When the communication device is a user equipment 101, its structure can also be shown in FIG. 14.

FIG. 14 is a block diagram of a monitoring device 1400 shown according to an example embodiment. Referring to FIG. 14, the device 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 generally controls the overall operation of the device 1400, such as operations associated with display, phone calls, data communications, camera operations, and recording operations. The processing component 1402 may include one or more processors 1420 to execute instructions to complete all or part of the steps of the above-described method. In addition, the processing component 1402 may include one or more modules to facilitate interaction between the processing component 1402 and other components. For example, the processing component 1402 may include a multimedia module to facilitate interaction between the multimedia component 1408 and the processing component 1402.

The memory 1404 is configured to store various types of data to support operations in the device 1400. Examples of such data include instructions for any application or method operating on the device 1400, contact data, phone book data, messages, pictures, videos, etc. The memory 1404 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

The power component 1406 provides power to various components of the device 1400. The power component 1406 may include a power management system, one or more power supplies, and other components associated with generating, managing and distributing power for the device 1400.

The multimedia component 1408 includes a screen that provides an output interface between the device 1400 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense the boundary of a touch or sliding action, but also detect the duration and pressure associated with the touch or sliding action. In some embodiments, the multimedia component 1408 includes a front camera and/or a rear camera. When the device 1400 is in an operating mode, such as a shooting mode or a video mode, the front camera and/or the rear camera may receive external multimedia data. Each front camera and rear camera may be a fixed optical lens system or have focal length and optical zoom capabilities.

The audio component 1410 is configured to output and/or input audio signals. For example, the audio component 1410 includes a microphone (MIC). When the device 1400 is in an operating mode, such as a call mode, a recording mode, and a voice recognition mode, the microphone is configured to receive an external audio signal. The received audio signal may be further stored in the memory 1404 or sent via the communication component 1416. In some embodiments, the audio component 1410 further includes a speaker for outputting an audio signal.

The I/O interface 1412 provides an interface between the processing component 1402 and peripheral interface modules. The peripheral interface modules may be keyboards, click wheels, buttons, etc. These buttons may include, but are not limited to, home buttons, volume buttons, start buttons, and lock buttons.

The sensor component 1314 includes one or more sensors for providing various aspects of status assessment for device 1400. For example, the sensor component 1414 can detect the open/closed state of device 1400, the relative positioning of components, such as the display and keypad of device 1400. The sensor component 1414 can further detect the position change of the device 1400 or a component of the device 1400, the presence or absence of user contact with device 1400, the orientation or acceleration/deceleration of device 1400, and the temperature change of device 1400. The sensor component 1414 may include a proximity sensor configured to detect the presence of nearby objects without any physical contact. The sensor component 1414 may further include a light sensor, such as a CMOS or CCD image sensor, for use in imaging applications. In some embodiments, the sensor component 1414 may further include an acceleration sensor, a gyroscope sensor, a magnetic sensor, a pressure sensor, or a temperature sensor.

The communication component 1416 is configured to facilitate wired or wireless communication between the device 1400 and other devices. The device 1400 can access a wireless network based on a communication standard, such as WiFi, 4G or 5G, or a combination thereof. In an example embodiment, the communication component 1416 receives a broadcast signal or broadcast-related information from an external broadcast management system via a broadcast channel. In an example embodiment, the communication component 1416 further includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology, and other technologies.

In an example embodiment, the device 1400 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above method.

In an example embodiment, a non-transitory computer-readable storage medium including instructions is also provided, such as a memory 1404 including instructions, and the above instructions may be executed by a processor 1420 of the device 1400 to complete the above method. For example, the non-transitory computer-readable storage medium may be a ROM, a random access memory (RAM), a CD-ROM, a tape, a floppy disk, and an optical data storage device.

Based on the same concept as the above method embodiment, the embodiment of the present disclosure also provides a communication device, which may have the function of the network device in the above method embodiment, and is configured to perform the steps performed by the network device provided in the above embodiment. The function may be implemented by hardware, or may be implemented by software or hardware executing the corresponding software. The hardware or software includes one or more modules corresponding to the above function.

In a possible implementation, the communication device 1500 shown in FIG. 15 can be used as the network device involved in the above method embodiment, and performs the steps performed by the network device in the above method embodiment.

The communication device 1500 includes a transceiver module 1501 and a processing module 1502.

The transceiver module 1501 is configured to send a low power consumption wake-up signal LP WUS to a user equipment UE before a first time domain position in a first time period. The first time period is a PDCCH skipping duration for skipping monitoring of a physical downlink control channel. The first time domain position is a starting time domain position of a first common search space CSS, and the LP WUS is configured to wake up the user equipment to monitor the first CSS.

In some possible implementations, the transceiver module 1501 is further configured to send the LP WUS in a second time period in the first time period. The second time period precedes the first time domain position.

In some possible implementations, the ending time domain position of the second time period is the first time domain position, or the ending time domain position of the second time period precedes the first time domain position.

In some possible implementations, the second time period does not overlap with the user equipment active time period, and the user equipment active time period is a time period in which the user equipment needs to monitor the PDCCH.

In some possible implementations, the transceiver module 1501 is further configured to send the first CSS.

In some possible implementations, the transceiver module 1501 is further configured to not send the LP WUS in a second time period when the second time period for the user equipment to monitor the LP WUS overlaps with the user equipment active time period. The user equipment active time period is a time period in which the user equipment needs to monitor the PDCCH, and the second time period precedes the first time domain position.

In some possible implementations, the transceiver module 1501 is further configured not to send a second CSS corresponding to the second time period, and the second CSS is one of the first CSS.

In some possible implementations, the user equipment active time period is an active time period when the user equipment is configured with connected mode discontinuous reception C-DRX.

In some possible implementations, the LP WUS is a multicast LP WUS or a broadcast LP WUS, and the LP WUS corresponds to multiple user equipments.

The LP WUS being configured to wake up the user equipment to monitor the first CSS is to wake up part or all of the UEs.

In some possible implementations, the LP WUS is a unicast LP WUS, and the LP WUS corresponds to the user equipment.

In some possible implementations, the first CSS is in the active bandwidth part BWP of the user equipment.

In some possible implementations, the first CSS is at least one of the following:
Type 0 CSS, Type 0A CSS, Type 0B CSS, Type 1 CSS, Type 1A CSS, Type 2 CSS, Type 2A CSS.

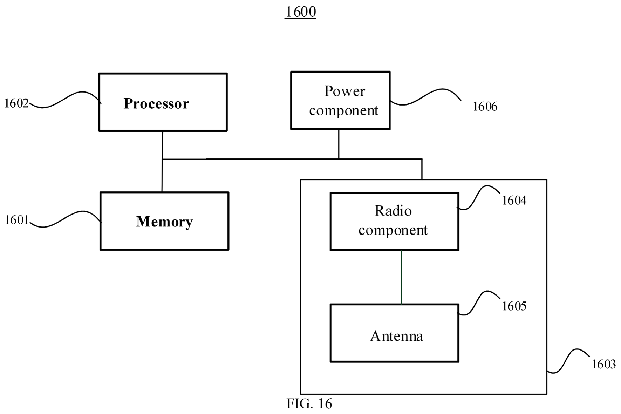

When the communication device is a network device 102, its structure can also be shown in FIG. 16. The structure of the communication device is illustrated by taking a base station as an example. As shown in FIG. 16, the device 1600 includes a memory 1601, a processor 1602, a transceiver component 1603, and a power supply component 1606. Among them, the memory 1601 is coupled with the processor 1602, and can be configured to store the programs and data necessary for the communication device 1600 to implement various functions. The processor 1602 is configured to support the communication device 1600 to perform the corresponding functions in the above method, and the functions can be implemented by calling the program stored in the memory 1601. The transceiver component 1603 can be a wireless transceiver, which can be configured to support the communication device 1600 to receive signaling and/or data, and send signaling and/or data through the wireless air interface. The transceiver component 1603 can also be called a transceiver unit or a communication unit. The transceiver component 1603 may include a radio frequency component 1604 and one or more antennas 1605. The radio frequency component 1604 may be a remote radio unit (RRU), which can be specifically used for the transmission of radio frequency signals and the conversion between radio frequency signals and baseband signals, and the one or more antennas 1605 can be specifically used for the radiation and reception of radio frequency signals.

When the communication device 1600 needs to send data, the processor 1602 can perform baseband processing on the data to be sent, and then output the baseband signal to the radio frequency unit. The radio frequency unit performs radio frequency processing on the baseband signal and then sends the radio frequency signal through the antenna in the form of electromagnetic waves. When data is sent to the communication device 1600, the radio frequency unit receives the radio frequency signal through the antenna, converts the radio frequency signal into a baseband signal, and outputs the baseband signal to the processor 1602. The processor 1602 converts the baseband signal into data and processes the data.

After considering the specification and practicing the present disclosure, it will be easy for those skilled in the art to think of other implementations of the embodiments of the present disclosure. This application is intended to cover any variation, use or adaptive change of the embodiments of the present disclosure, which follows the general principles of the embodiments of the present disclosure and includes common knowledge or conventional technical means in the technical field that are not disclosed in the present disclosure. The specification and embodiments are only to be regarded as examples, and the true scope and spirit of the embodiments of the present disclosure are indicated by the following claims.

It should be understood that the embodiments of the present disclosure are not limited to the precise structures described above and shown in the accompanying drawings, and various modifications and changes can be made without departing from the scope thereof. The scope of the embodiments of the present disclosure is limited only by the appended claims.

### Industrial Applicability

Using the LP WUS, by monitoring the LP WUS, it is determined whether to monitor the first CSS. After receiving the LP WUS, the UE monitors the first CSS, and does not monitor the first CSS if not receiving LP WUS. When using PDCCH monitoring skipping, the monitoring effect is guaranteed while also saving the energy consumption of the UE.

## Claims

1. A monitoring method, performed by a user equipment UE, the method comprising:
monitoring a low power wake-up signal LP WUS before a first time domain position in a first time period, wherein the first time period is a time period PDCCH skipping duration for skipping monitoring of a physical downlink control channel, the first time domain position is a starting time domain position of a first common search space CSS, and the LP WUS is configured to wake up the user equipment to monitor the first CSS.

2. The method according to claim 1, wherein monitoring the LP WUS before the first time domain position in the first time period comprises:
monitoring the LP WUS in a second time period in the first time period, wherein the second time period precedes the first time domain position.

3. The method according to claim 2, wherein an ending time domain position of the second time period is the first time domain position, or the ending time domain position of the second time period precedes the first time domain position.

4. The method according to claim 2 or 3, wherein the second time period does not overlap with a user equipment active time period, and the user equipment active time period is a time period in which the user equipment needs to monitor the PDCCH.

5. The method according to claim 4, further comprising:
after receiving the LP WUS, monitoring the first CSS.

6. The method according to claim 2 or 3, further comprising:
in a case where the second time period for the user equipment to monitor the LP WUS overlaps with the user equipment active time period, not monitoring the LP WUS in the second time period, wherein the user equipment active time period is a time period in which the user equipment needs to monitor the PDCCH, and the second time period precedes the first time domain position.

7. The method according to claim 6, further comprising:
not monitoring a second CSS corresponding to the second time period, wherein the second CSS is one of the first CSS.

8. The method according to claim 4 or 6, wherein the user equipment active time period is an active time period in which the user equipment is configured with connected mode discontinuous reception C-DRX.

9. The method according to any one of claims 1 to 8, wherein the LP WUS is a multicast LP WUS or a broadcast LP WUS, and the LP WUS corresponds to multiple user equipments; and
wherein the LP WUS is configured to wake up the user equipment to monitor the first CSS is to wake up part or all of the UEs.

10. The method according to any one of claims 1 to 3 or 5 or 7, wherein the LP WUS is a unicast LP WUS corresponding to the user equipment.

11. The method according to any one of claims 1 to 3 or 5 or 7, wherein the first CSS is in an active bandwidth part BWP of the user equipment.

12. The method according to any one of claims 1 to 3 or 5 or 7, wherein the first CSS is at least one of:
Type 0 CSS, Type 0A CSS, Type 0B CSS, Type 1 CSS, Type 1A CSS, Type 2 CSS, Type 2A CSS.

13. A control method, performed by a network device, the method comprising:
sending a low power wake-up signal LP WUS to a user equipment UE before a first time domain position in a first time period, wherein the first time period is a time period PDCCH skipping duration for skipping monitoring of a physical downlink control channel PDCCH, the first time domain position is a starting time domain position of a first common search space CSS, and the LP WUS is configured to wake up the user equipment to monitor the first CSS.

14. The method according to claim 13, wherein sending the LP WUS before the first time domain position in the first time period comprises:
sending the LP WUS in a second time period in the first time period, wherein the second time period precedes the first time domain position.

15. The method according to claim 14, wherein an ending time domain position of the second time period is the first time domain position, or the ending time domain position of the second time period precedes the first time domain position.

16. The method according to claim 14 or 15, wherein the second time period does not overlap with a user equipment active time period, and the user equipment active time period is a time period in which the user equipment needs to monitor the PDCCH.

17. The method according to claim 16, further comprising
sending the first CSS.

18. The method according to claim 14 or 15, further comprising:
in a case where the second time period for the user equipment to monitor the LP WUS overlaps with the user equipment active time period, not sending the LP WUS in the second time period, wherein the user equipment active time period is a time period in which the user equipment needs to monitor the PDCCH, and the second time period precedes the first time domain position.

19. The method according to claim 18, further comprising:
not sending a second CSS corresponding to the second time period, wherein the second CSS is one of the first CSS.

20. The method according to claim 16 or 18, wherein the user equipment active time period is an active time period in which the user equipment is configured with connected mode discontinuous reception C-DRX.

21. The method according to any one of claims 13 to 20, wherein the LP WUS is a multicast LP WUS or a broadcast LP WUS, and the LP WUS corresponds to multiple user equipments;
wherein the LP WUS is configured to wake up the user equipment to monitor the first CSS is to wake up part or all of the UEs.

22. The method according to claim 13, 15, 17 or 19, wherein the LP WUS is a unicast LP WUS, and the LP WUS corresponds to the user equipment.

23. The method according to claim 13, 15, 17 or 19, wherein the first CSS is in an active bandwidth part BWP of the user equipment.

24. The method according to claim 13, 15, 17 or 19, wherein the first CSS is at least one of:
Type 0 CSS, Type 0A CSS, Type 0B CSS, Type 1 CSS, Type 1A CSS, Type 2 CSS, Type 2A CSS.

25. A monitoring device, configured in a user equipment, comprising:
a transceiver module, configured to monitor a low power wake-up signal LP WUS before a first time domain position in a first time period, wherein the first time period is a time period PDCCH skipping duration for skipping monitoring of a physical downlink control channel, the first time domain position is a starting time domain position of a first common search space CSS, and the LP WUS is configured to wake up the user equipment to monitor the first CSS.

26. A control device, configured in a network device, comprising:
a transceiver module, configured to send a low power wake-up signal LP WUS to a user equipment UE before a first time domain position in a first time period, wherein the first time period is a time period PDCCH skipping duration for skipping monitoring of a physical downlink control channel, the first time domain position is a starting time domain position of a first common search space CSS, and the LP WUS is configured to wake up the user equipment to monitor the first CSS.

27. An electronic device, comprising a processor and a memory, wherein:
the memory is configured to store a computer program; and
the processor is configured to execute the computer program to implement the method according to any one of claims 1 to 12 or 13 to 24.

28. A computer-readable storage medium, wherein instructions are stored in the computer-readable storage medium, and when the instructions are called and executed on a computer, the computer executes the method according to any one of claims 1 to 12 or 13 to 24.
